# EUROPEAN PATENT APPLICATION

(11) **EP 4 238 717 A1**
(43) Date of publication of application: **06.09.2023**
(21) Application number: 22874406.6
(22) Date of filing: 29.07.2022
(51) Int. Cl.: B25J 11/00, B25B 27/00

(54) **UNIVERSAL FIXTURE, ROBOT, AND UNLOCKING SYSTEM**

(30) Priority: 30.09.2021 CN 202111164690
(71) Applicant: Sany Marine Heavy Industry Co., Ltd., Zhuhai, Guangdong 519090 (CN)
(72) Inventor: LI, Wei, Zhuhai, Guangdong 519090 (CN); LIU, Munan, Zhuhai, Guangdong 519090 (CN); WU, Muling, Zhuhai, Guangdong 519090 (CN)
(74) Representative: Murgitroyd & Company
(86) International application number: PCT/CN2022/109080
(87) International publication number: WO 2023/051010

(57) **Abstract**

A universal fixture, comprising: a base (100), having a quick-replacement cavity (110) enclosed by a side wall of the base (100); a clamping assembly (200), disposed on the side wall and configured to be capable of extending out from the side wall or retracting back; a driving mechanism (300), disposed on the base (100) and configured to extend into the quick-replacement cavity (110) to drive the clamping assembly (200) to extend or retract; and an unlocking mechanism (400), disposed on the base (100) and configured to penetrate through the quick-replacement cavity (110) to provide unlocking power. During unlocking, the driving mechanism (300) drive the clamping assembly (200) to extend out of the side plate of the base (100) to fix a fixture flange (700), when an unlocking fixture need to be replaced, the driving mechanism (300) drive the clamping assembly (200) to retract into the quick-replacement cavity (110) to complete the disassembly of the unlocking fixture, thereby automatically completing the disassembly and assembly of the unlocking fixture, and thus improving the automation level of a port or a wharf and facilitating the construction of unmanned port or wharf. The present application further relates to a robot and an unlocking system.

## Description

### TECHNICAL FIELD

The present application relates to the technical field of safe loading and unloading of container, and in particular, to a universal fixture, a robot, and an unlocking system.

### BACKGROUND

A container, as a container of an object, generally has a large accommodating space, and is transferred by means of a ship or a large-scale engineering vehicle, and a transfer place thereof is mainly a port, a wharf, and the like. When the container is transferred, the lock on the container needs to be unlocked, but due to many types of locks, each type of lock usually needs a special unlocking fixture to perform an unlocking action.

In the prior art, an unlocking fixture is mounted on a universal fixture, and as to different types of locks, when an unlocking fixture needs to be replaced with a type, corresponding to a type of a lock, of unlocking fixture, an operator needs to manually judge a type of the unlocking fixture and manually disassemble and assemble the unlocking fixture and the universal fixture, which leads to a low level of automation in the entire port or wharf.

### SUMMARY

In view of this, embodiments of the present application provide a universal fixture, a robot, and an unlocking system, which solve or improve a problem that an overall automation degree is low due to a fact that automatic completion is difficult to implement during replacement of an unlocking fixture.

According to a first aspect, a universal fixture provided in the present application includes: a base, having a quick-replacement cavity enclosed by a side wall of the base; a clamping assembly, disposed on the side wall and configured to be capable of extending out from the side wall or retract back; a driving mechanism disposed on the base and configured to extend into the quick-replacement cavity to drive the clamping assembly to extend or retract; and an unlocking mechanism, disposed on the base and configured to penetrate through the quick-replacement cavity to provide unlocking power.

The universal fixture provided by the present application is used to install an unlocking fixture corresponding to the lock during unlocking, a fixture flange is sleeved on an outer side of the clamping assembly, and the clamping assembly is driven by the driving mechanism to extend out from a side plate of the base, so that the fixture flange may be fixed when the clamping assembly extends out, and then using the unlocking mechanism to unlock. When the unlocking fixture needs to be replaced, only the clamping assembly needs to be retracted into the quick-replacement cavity by using the driving mechanism, so that a disassembly of the unlocking fixture is completed, and the unlocking fixture may be replaced with other types of unlocking fixtures. In this way, the disassembly and assembly of the unlocking fixture are automatically completed, so that an automation degree of a port or a wharf is improved, so as to facilitate a construction of an unmanned port or an unmanned wharf. Moreover, the universal fixture provided by the present application is compact in structure and beneficial to saving space.

In combination with the first aspect, in a possible implementation, the driving mechanism includes a lead screw and a pressing member in a threaded fit with the lead screw, the pressing member is located in the quick-replacement cavity and is driven to move through rotation of the lead screw, so as to drive the clamping assembly to extend or retract; a rotating cavity is disposed in the lead screw;
and the unlocking mechanism includes a rotating shaft configured to drive a unlocking assembly to rotate, and the rotating shaft penetrates through the rotating cavity.

In combination with the first aspect, in a possible implementation, the driving mechanism further includes a first power member and a first transmission assembly driven by the first power member, and the first transmission assembly is connected to the lead screw to drive the lead screw to rotate; and
the unlocking mechanism further includes a second power member and a second transmission assembly driven by the second power member, and the second transmission assembly is connected to the rotating shaft to drive the rotating shaft to rotate, wherein
the first power member and the second power member both use an electric motor with a brake function.

In combination with the first aspect, in a possible implementation, a bearing is disposed in the rotating cavity, and the rotating shaft is supported by the bearing to rotate.

In combination with the first aspect, in a possible implementation, the side wall of the base is provided with a clamping hole in communication with the quick-replacement cavity, and the clamping assembly includes: a pin rod, slidably connected to the clamping hole; and a pin head, wherein the pin head is disposed at an end, close to the quick-replacement cavity, of the pin rod, and a cross-sectional area of the pin head is greater than a cross-sectional area of the clamping hole, wherein the driving mechanism is in contact with the pin head.

In combination with the first aspect, in a possible implementation, the clamping assembly further includes: an elastic resetting member, wherein the elastic resetting member abuts against the pin head, and a side, away from the pin head, of the elastic resetting member abuts against a cavity wall of the quick-replacement cavity.

In combination with the first aspect, in a possible implementation, a side, away from the pin head, of the pin rod is provided with a spherical surface.

In combination with the first aspect, in a possible implementation, the universal fixture further includes: a fixture flange, detachably connected to the base by using the clamping assembly.

In combination with the first aspect, in a possible implementation, the universal fixture further includes: a floating device, disposed on the base, wherein the floating device is connected to the fixture flange.

In combination with the first aspect, in a possible implementation, the floating device further includes: a guide member, disposed on the base; and an elastic member, wherein the elastic member is disposed on the guide member and one end of the elastic member abuts against the base.

In combination with the first aspect, in a possible implementation, the driving mechanism includes: a lead screw, rotatably connected to the base, and one end of the lead screw is located in the quick-replacement cavity; a driving member, connected to the lead screw, wherein the driving member is configured to drive the lead screw to rotate; and a pressing member, wherein the pressing member is in threaded connection with one end, located in the quick-replacement cavity, of the lead screw, and the pressing member abuts against the clamping assembly, so that the pressing member moves axially along the lead screw to push the clamping assembly to extend or retract.

In combination with the first aspect, in a possible implementation, an outer side surface of the pressing member is provided with a first pressing inclined surface, and an outer side surface of the clamping assembly is provided with a second pressing inclined surface that abuts against the first pressing inclined surface.

In combination with the first aspect, in a possible implementation, the driving mechanism further includes: a limiting rod, wherein one end of the limiting rod is connected to the base; the pressing member is provided with a limiting hole, and one end, away from the base, of the limiting rod is in a sliding fit with the limiting hole; and

The limiting rod is provided with a boss, a cross-sectional area of the boss is greater than a cross-sectional area of the limiting hole, so as to limit a movement range of the pressing member.

In combination with the first aspect, in a possible implementation, the driving member includes: a first power member, provided with a first power output end; and a first transmission assembly, connected to the first power output end and the lead screw respectively.

In combination with the first aspect, in a possible implementation, the unlocking mechanism includes: a second power member, provided with a second power output end; a second transmission assembly, connected to the second power output end; a rotating shaft, rotatably connected to the base and partially located in the quick-changing cavity, wherein the rotating shaft is connected to the second transmission assembly; a rotating assembly, fixedly connected to the rotating shaft, wherein the rotating assembly partially extends out from the base, so as to implement unlocking during rotation; and a unlocking assembly, connected to a side, extending out from the base, of the rotating assembly.

In combination with the first aspect, in a possible implementation, an expansion cavity is formed in the rotating shaft.

In combination with the first aspect, in a possible implementation, the rotating assembly includes: a connecting member, fixedly connected to the rotating shaft; and a toggle member, fixed on the connecting member, wherein one end, away from the connecting member, of the toggle member extends out from the quick-replacement cavity, and the base is provided with a sliding ring hole for the toggle member to slide.

In combination with the first aspect, in a possible implementation, the universal fixture further includes: a fixed shaft, fixed on the base; and a support plate, fixed at one end, away from the base, of the fixed shaft, wherein both the first transmission assembly and the second transmission assembly are rotatably connected to the support plate.

According to a second aspect, a robot is provided in the present application, and the robot includes: the universal fixture according to the first aspect of the present application; and an identification system, disposed on the base of the universal fixture.

According to the robot provided in the second aspect of the present application, in the operation process, a corresponding operation process may be quickly completed through the automatic action of the universal fixture, so that an automation degree is improved. After the fixture flange is fixed, an operation of the robot may be controlled by the identification system.

According to a third aspect, an unlocking system is provided in the present application, and the unlocking system includes: the robot according to the second aspect of the present application; a conveying device, disposed outside the robot.

According to the unlocking system provided in the third aspect of the present application, when the robot is used to perform an unlocking action, a corresponding unlocking fixture may be conveyed to a vicinity of the robot by means of the conveying device, and a lock removed by the robot may also be transported to a designated position, so as to effectively improve an overall automation degree.

### BRIEF DESCRIPTION OF THE DRAWINGS

Embodiments of the present application are described in more detail with reference to the accompanying drawings, and above and other objects, features and advantages of the present application become more apparent. Drawings are used to provide a further understanding of the embodiments of the present application, and constitute a part of the specification, and are used to explain the present application together with the embodiments of the present application, and do not constitute a limitation on the present application. In the drawings, like reference numerals generally represent the same components or steps.
FIG. 1 is a schematic structural diagram of a front sectional view of a universal fixture according to some embodiments of the present application;
FIG. 2 is a schematic structural diagram of a left sectional view of a universal fixture according to some embodiments of the present application;
FIG. 3 is an enlarged view of part A according to an implementation shown in Figure 2.
FIG. 4 is a schematic partially structural diagram according to an implementation shown in Figure 2.
FIG. 5 is a schematic structural diagram of a right sectional view of a universal fixture according to some embodiments of the present application;
FIG. 6 is schematic diagram of a top view of a universal fixture after hiding an identification system according to some embodiments of the present application.

### DETAILED DESCRIPTIONS OF THE EMBODIMENTS

Technical solutions in the embodiments of the present application are clearly and completely described below with reference to the accompanying drawings in the embodiments of the present application. All other embodiments obtained by a person of ordinary skill in the art based on the embodiments of the present application without creative efforts shall fall within the protection scope of the present application.

### Brief Summary of The Present Application

In a loading and unloading process of a container, both fixing and dismounting of the container are completed through a special lock, and there are many types of locks, and an unlocking fixture is determined according to the type of the lock. When fixing and dismounting the container, the lock is fixed or removed after the unlocking fixture is matched with the lock to fix or remove the lock, so as to complete the fixing and dismounting of the container.

In the prior art, when types of locks on a container are different, unlocking fixtures required for unlocking are also different, and in this case, an unlocking fixture needs to be replaced to deal with different types of locks. However, during a using of the unlocking fixture, the unlocking fixture needs to be fixed on a corresponding universal fixture first, and the unlocking fixture and the universal fixture are assembled and disassembled manually, this process is not only time-consuming and labor-consuming, but also reduces an automation degree of the whole process of loading and unloading of the container, and then an unmanned development and progress of a port or a wharf are delayed.

According to a universal fixture, a robot, and an unlocking system provided in the present application, a quick-replacement device arranged inside the universal fixture is detachably connected to an unlocking fixture used for unlocking, and the quick-replacement device is driven by a motor, so that when replacing the unlocking fixture, only the motor need to be driven to achieve the fixation and separation of the unlocking fixture, thereby achieving automatic replacement of the unlocking fixture, which not only saves time and labor, but also improves an automation degree in a container loading and unloading process, and promotes an unmanned construction of a port or a wharf.

After an implementation principle of the present application is briefly described, various non-limiting embodiments of the present application are specifically described below with reference to the accompanying drawings.

### Exemplary Universal Fixture

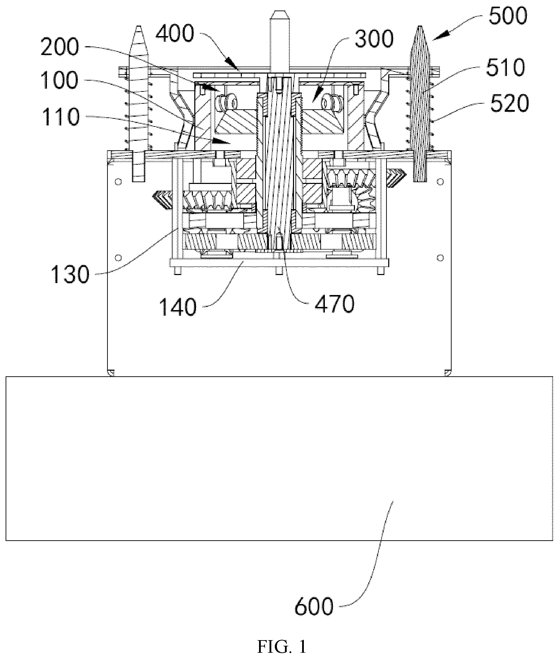

FIG. 1 is a schematic structural diagram of a front sectional view of a universal fixture according to some embodiments of the present application. Referring to FIG. 1, the universal fixture includes a base 100, a clamping assembly 200, a driving mechanism 300, and an unlocking mechanism 400. The base 100 has a quick-replacement cavity 110 enclosed by a side wall of the base 100. The clamping assembly 200 is disposed on the side wall of the base 100 and capable of extending out from the side wall of the base 100 or retracting back. The driving mechanism 300 is disposed on the base 100, and the driving mechanism 300 extends into the quick-replacement cavity 110 to drive the clamping assembly 200 to extend or retract. The unlocking mechanism 400 is disposed on the base 100, and penetrates through the quick-replacement cavity 110 to provide unlocking power.

According to the universal fixture provided by the embodiment, during a using of the universal fixture, the unlocking fixture is fixed on the base 100 by utilizing an extension of the clamping assembly 200, so that a mounting of the unlocking fixture is achieved. After the unlocking fixture is mounted, the unlocking mechanism 400 is used to perform unlocking, wherein the unlocking mechanism 400 is configured to provide power when the unlocking fixture performs unlocking (the unlocking mechanism 400 is specifically described below). When the fixture needs to be replaced to match with different locks, the clamping assembly 200 only needs to be retracted into the quick-replacement cavity 110 by using the driving mechanism 300, so that the clamping assembly 200 releases the fixation on the unlocking fixture. In this way, an automatic replacement of the unlocking fixture is achieved, a manual participation degree of a worker is reduced, and an automation degree in a container loading and unloading process is effectively improved.

Moreover, the arrangement of the driving mechanism 300 and the unlocking mechanism 400 in the present application makes structure compact, which is beneficial for saving space.

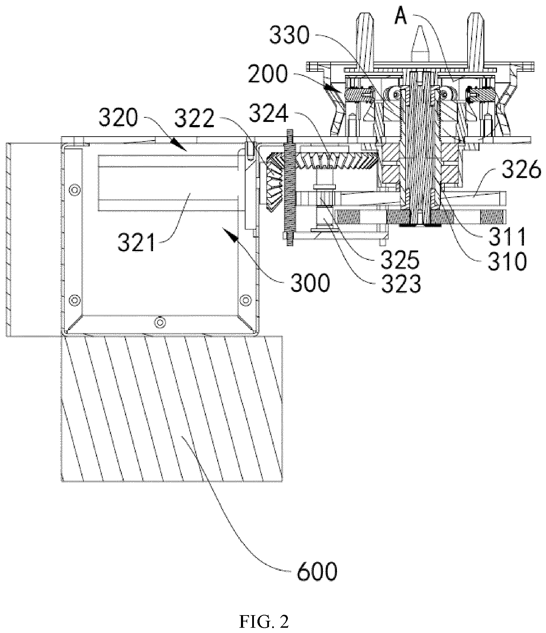

In an embodiment, as shown in FIG. 1 and FIG. 2, a driving mechanism 300 includes a lead screw 310 and a pressing member 330 in a threaded fit with the lead screw 310, one end of the lead screw 300 extends into a quick-replacement cavity 110, and the pressing member 330 is located in the quick-replacement cavity 110, and is driven to move through rotation of the lead screw 310, so as to drive a clamping assembly 200 to extend or retract. In some embodiments of the present application, a rotating cavity 311 is disposed in a lead screw 310, and an unlocking mechanism 400 partially penetrates through the rotating cavity 311. The unlocking mechanism 400 penetrates through the rotating cavity 311, so that space occupied by the unlocking mechanism 400 may be effectively saved, and overall weight may also be reduced.

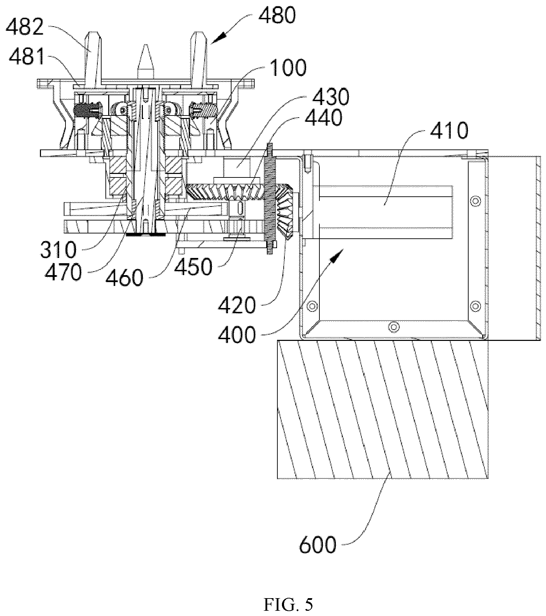

As shown in FIG. 5, an unlocking mechanism 400 includes a rotating shaft 470 configured to drive an unlocking assembly to rotate, and the rotating shaft 470 penetrates through the rotating cavity 311.

By penetrating the rotating shaft 470 of the unlocking mechanism 400 into the lead screw 310, and driving the rotating shaft 470 and the lead screw 310 by their respective driving components to rotate, a complexity of a structure may be effectively reduced, the structure is compact, and occupied space is reduced.

Further, a driving mechanism 300 further includes a first power member 321 and a first transmission assembly driven by the first power member 321, and the first transmission assembly is connected to a lead screw 310 to drive the lead screw 310 to rotate;
an unlocking mechanism 400 further includes a second power member 410 and a second transmission assembly driven by the second power member 410, and the second transmission assembly is connected to a rotating shaft 470 to drive the rotating shaft 470 to rotate, wherein
a unlocking assembly driven to rotate by the rotating shaft 470 is disposed at an upper end, extending out from the lead screw 310, of the rotating shaft 470, and the second transmission assembly is connected to a lower end, extending out from the lead screw 310, of the rotating shaft 470. The first transmission assembly that drives the lead screw 310 to rotate may be disposed at a lower end of the lead screw 310. The first transmission assembly and the second transmission assembly may be arranged substantially symmetrically (specifically described in more detail below).

In order to enable the rotating shaft 470 and the lead screw 310 to not interfere with each other during rotation, and to avoid friction driving each other to rotate, the first power member 321 and the second power member 410 both use an electric motor with a brake function, and the electric motor may be a servo motor, a stepper motor, or other speed regulation motors.

In some embodiments, a bearing may be disposed between a lead screw 310 and a rotating shaft 470, and two ends of the rotating shaft 470 is supported by the bearing to rotate.

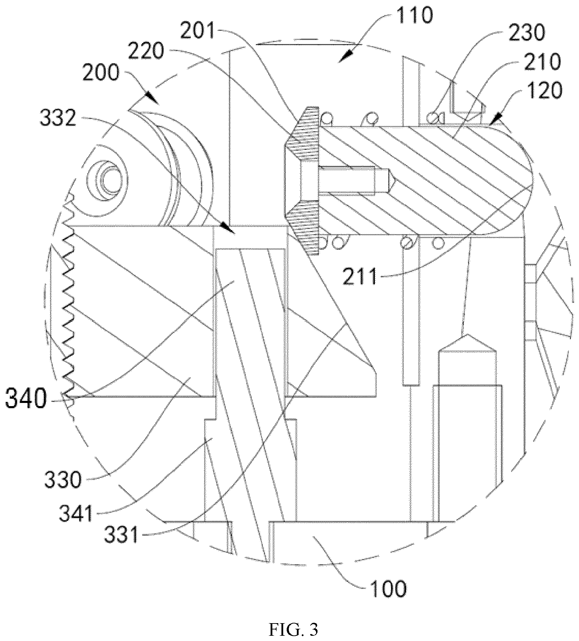

FIG. 2 is a schematic structural diagram of a left sectional view of a universal fixture according to some embodiments of the present application. FIG. 3 is an enlarged view of part A according to an implementation shown in Figure 2. Referring to FIG. 3, a plurality of sets of clamping assemblies 200 may be provided, such as six sets. Six sets of clamping assemblies 200 are uniformly distributed along a circumferential direction of a lead screw 310. Therefore, when the clamping assembly 200 extends out, an unlocking fixture may be clamped in multiple directions, so as to improve a fixing effect on the unlocking fixture. The number of the clamping assemblies 200 may be determined according to a size of a whole device, and the number of the clamping assemblies 200 is not limited in the present application.

Referring to FIG. 3, in some embodiments of the present application, a side wall of a base 100 is provided with a clamping hole 120 in communication with a quick-replacement cavity 110. A clamping assembly 200 includes a pin rod 210 and a pin head 220. The pin rod 210 is slidably connected to the clamping hole 120. The pin head 220 is disposed at an end, close to the quick-replacement cavity 110, of the pin rod 210, and a cross-sectional area of the pin head 220 is greater than a cross-sectional area of the clamping hole 120. The pin rod 210 and the pin head 220 may be integrally formed, or may be fixed by welding. The driving mechanism 300 is in contact with the pin head 220.

During a fixing of an unlocking fixture, the pin head 220 is pushed to move by using a pressing of a first pressing inclined surface 331 and a second pressing inclined surface 201, the pin head 220 pushes the pin rod 210 to move, the pin rod 210 extends out from the clamping hole 120, and when the pin rod 210 extends out from the clamping hole 120, the pin rod 210 abuts against the unlocking fixture, so that the unlocking fixture is smoothly fixed.

Referring to FIG. 3, in some embodiments of the present application, a hole wall width of a clamping hole 120 may be greater than half of a length of a pin rod 210 but less than the length of the pin rod 210, so that a contact area of the pin rod 210 and the clamping hole 120 may be increased to provide a sufficient overturning moment, and a possibility of a gap between the pin rod 210 and the clamping hole 120 may also be reduced.

Referring to FIG. 3, in some embodiments of the present application, a clamping assembly 200 further includes an elastic resetting member 230. The elastic resetting member 230 abuts against the pin head 220, and a side, away from the pin head 220, of the elastic resetting member 230 abuts against a cavity wall of a quick-replacement cavity 110.

When a first pressing inclined surface 331 and a second pressing inclined surface 201 are pressing, due to a movement of the pin head 220, the elastic resetting member 230 is pressed to generate a compression deformation, and after the first pressing inclined surface 331 and the second pressing inclined surface 201 are separated, the elastic resetting member 230 automatically recovers deformation to drive the pin head 220 to reset, and the pin head 220 drives the pin rod 210 to reset, so that an automatic reset of the clamping assembly 200 is achieved.

In some embodiments of the present application, an elastic resetting member 230 may be a reset spring, the reset spring may be sleeved on a pin rod 210, and one end of the reset spring is fixedly connected to the pin head 220, the other end of the reset spring is fixedly connected to a cavity wall of a quick-replacement cavity 110. Therefore, when the pin rod 210 is reset, the reset spring is limited by the cavity wall and the pin head 220, so that a possibility that the pin rod 210 is disengaged from the clamping hole 120 is reduced.

In some embodiments of the present application, a side, away from a pin head 220, of a pin rod 210 is provided with a spherical surface 211. The spherical surface 211 may increase an area of the pin rod 210 and an unlocking fixture, so that a fixing effect on the unlocking fixture is improved.

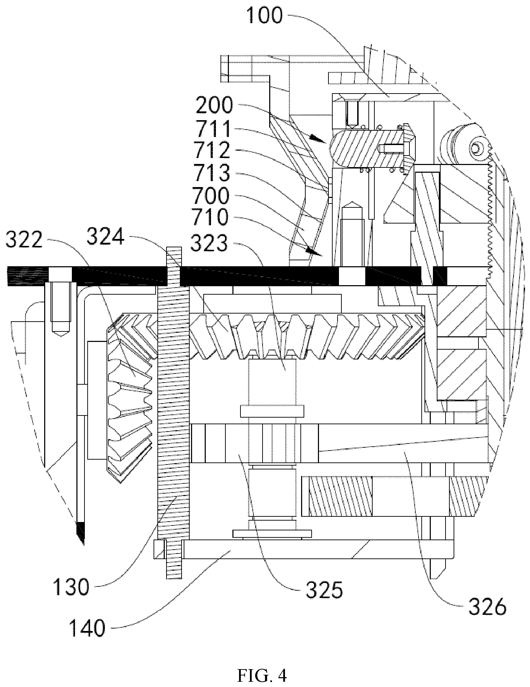

FIG. 4 is a schematic partially structural diagram according to an implementation shown in Figure 2. Referring to FIG. 4, a fixture flange 700 is detachably connected to a base 100, a pin rod 210 may fix the fixture flange 700 to the base 100 by extending out from a side wall, and release the fixture flange 700 by retracting. Wherein, the fixture flange 700 is connected to an unlocking fixture (not shown in the figure), that is, the unlocking fixture is detachably connected to the base 100 through the fixture flange 700. Specifically, the fixture flange 700 may be detachably connected to the unlocking fixture through a bolt, or may be fixedly connected in other manners.

Specifically, the fixture flange 700 has a connecting cavity 710, a cavity wall of the connecting cavity 710 is provided with an abutting inclined surface 711, a clamping surface 712, and a positioning inclined surface 713, the abutting inclined surface 711 abuts against a clamping assembly 200, the clamping surface 712 fits an outer side wall of the base 100, and the clamping surface 712 is located between the abutting inclined surface 711 and the positioning inclined surface 713.

Referring to FIG. 4, the connecting cavity 710 is cylindrical in shape, and a whole connecting cavity 710 has a shape with a large opening at two ends and a small opening in the middle. That is, a diameter of a portion of the connecting cavity 710 where the positioning inclined surface 713 is located decreases progressively from a side away from the clamping surface 712 toward a side close to the clamping surface 712; and a diameter of a portion of the connecting cavity 710 where the abutting inclined surface 711 is located increases progressively from the side close to the clamping surface 712 toward the side away from the clamping surface 712.

During a connecting of the unlocking fixture and a robot, an opening of the portion of the connecting cavity 710 where the positioning inclined surface 713 of the fixture flange 700 is located is large, so that the base 100 may be conveniently inserted into the connecting cavity 710. And the clamping surface 712 fits the outer side wall of the base 100, and a movement range of the fixture flange 700 may be effectively limited. In cooperation with a pressing of the abutting inclined surface 711 and the clamping assembly 200, the unlocking fixture and the robot may be smoothly fixed together.

Referring to FIG. 1, in some embodiments of the present application, a universal fixture further includes a floating device 500. The floating device 500 is disposed on a base 100, and connected to a fixture flange 700. During a fixing of an unlocking fixture, the floating device 500 is used to adjust a position of the fixture flange 700 relative to the base 100, so that a possibility of a dislocation between the fixture flange 700 and the base 100 is mitigated.

Referring to FIG. 1, in some embodiments of the present application, a floating device 500 includes a guide member 510 and an elastic member 520. The guide member 510 is disposed on a base 100. The elastic member 520 is disposed on the guide member 510, and one end of the elastic member 520 abuts against the base 100.

Specifically, the guide member 510 may be a guide post fixed on an outer side wall of the base 100 in a vertical direction, the fixture flange 700 has a guide hole for the guide post to pass through, the elastic member 520 may be a floating spring sleeved on the guide post, one end of the floating spring is fixedly connected to an outer side wall of the base 100, and the other end of the floating spring abuts against an unlocking fixture.

During a connecting of the unlocking fixture and the base 100, the guide post is inserted into the guide hole, and the floating spring is used to limit a relative position of the unlocking fixture and the base 100, so that a possibility of a dislocation between the unlocking fixture and the base 100 is effectively reduced.

Referring to FIG. 2, a driving mechanism 300 includes a lead screw 310, a driving member 320, and a pressing member 330. The lead screw 310 is rotatably connected to a base 100, for example, the lead screw 310 is connected with two bearings to realize a rotational connection of the lead screw 310, and one end of the lead screw 310 is located in a quick-replacement cavity 110. The driving member 320 is connected to the lead screw 310, for example, one end, extending out from the quick-replacement cavity 110, of the lead screw 310 is connected to the driving member 320, and the driving member 320 is configured to drive the lead screw 310 to rotate. The pressing member 330 is in threaded connection with one end, located in the quick-replacement cavity 110, of the lead screw 310, and the pressing member 330 abuts against a clamping assembly 200, so that the pressing member 330 moves axially along the lead screw 310 to push the clamping assembly 200 to extend or retract.

When the clamping assembly 200 needs to be driven to extend out from the quick-replacement cavity 110, the lead screw 310 is driven by the driving member 320 to rotate, and the lead screw 310 drives the pressing member 330 to move upward along an axis of the lead screw 310 through a thread fit. As the pressing member 330 moves upwards, the clamping assembly 200 abuts against the pressing member 330, and the clamping assembly 200 gradually extends out from the quick-replacement cavity 110.

When the clamping assembly 200 needs to be retracted, only the driving member 320 is required to drive the lead screw 310 to rotate reversely, the lead screw 310 drives the pressing member 330 to move downwards along an axial direction of the lead screw 310, then the pressing member 330 is separated from the clamping assembly 200 without abutting, and the clamping assembly 200 may retract.

In some embodiments of the present application, an outer side surface of the pressing member 330 is provided with a first pressing inclined surface 331, and an outer side surface of a clamping assembly 200 is provided with a second pressing inclined surface 201 that abuts against the first pressing inclined surface 331. Specifically, the second pressing inclined surface 201 is disposed on a side, away from a pin rod 210, of a pin head 220. By abutting the first pressing inclined surface 331 and the second pressing inclined surface 201, when the pressing member 330 moves up or down, the clamping assembly 200 may be smoothly driven to extend or retract.

Referring to FIG. 3, in some embodiments of the present application, the driving mechanism 300 further includes a limiting rod 340. One end of the limiting rod 340 is connected to a base 100, wherein the pressing member 330 is provided with a limiting hole 332, and one end, away from the base 100, of the limiting rod 340 is in a sliding fit with the limiting hole 332. Specifically, an axis of the limiting rod 340 is parallel to an axis of the lead screw 310, two limiting rods 340 may be provided, and the lead screw 310 is located between the two limiting rods 340.

When the lead screw 310 rotates, due to a fact that the lead screw 310 and the pressing member 330 are in a threaded fit, when the lead screw 310 rotates, the pressing member 330 is driven to rotate due to a friction force of a thread, but a rotation of the pressing member 330 is limited through a pressing of the limiting rod 340 and the limiting hole 332, so that the pressing member 330 may not rotate, and when the lead screw 310 rotates, the pressing member 330 may be smoothly driven to move upwards or descend through the thread fit.

A certain gap may be reserved between the limiting rod 340 and the limiting hole 332, so that a contact area between the limiting rod 340 and the limiting hole 332 is reduced, and a friction force between the limiting hole 332 and the limiting rod 340 is effectively reduced when the pressing member 330 moves.

Referring to FIG. 3, a boss 341 may be disposed on the limiting rod 340, the boss 341 is located below the pressing member 330, a cross-sectional area of the boss 341 is greater than a cross-sectional area of the limiting hole 332, and a moving range of the pressing member 330 may be limited by providing the boss 341, so that the pressing member 330 is prevented from disengaging from a clamping assembly 200 during movement.

In some embodiments of the present application, the pressing member 330 may be a circular truncated cone nut, and a threaded hole is formed in a middle of the circular truncated cone nut for the lead screw 310 to pass through and the circular truncated cone nut is in a threaded connection with the lead screw 310. A limiting hole 332 is disposed on both sides of the circular truncated cone nut in a penetrating manner, and a first pressing inclined surface 331 is disposed on a top wall of the circular truncated cone nut and is disposed along a circumferential direction of the circular truncated cone nut.

Referring to FIG. 4, in some embodiments of the present application, the driving member 320 includes a first power member 321 and a first transmission assembly. The first transmission assembly includes a first gear 322, a first transmission shaft 323, a second gear 324, a third gear 325, and a fourth gear 326. The first power member 321 has a first power output end, for example, a first power member 321 may use a self-locking motor, and a motor shaft of the self-locking motor may serve as a first power output end. The first gear 322 is connected to the first power output end. The first transmission shaft 323 is rotatably connected to a base 100. The second gear 324 is fixed on the first transmission shaft 323, and the second gear 324 is engaged with the first gear 322. The third gear 325 is fixed on the first transmission shaft 323. The fourth gear 326 is engaged with the third gear 325, and the fourth gear 326 is fixedly connected to the lead screw 310.

When the lead screw 310 rotates, the first power output end of the first power member 321 outputs power to drive the first gear 322 to rotate, and the first gear 322 drives the second gear 324 to rotate to drive the first transmission shaft 323 to rotate, so that the third gear 325 is driven to rotate. As the third gear 325 rotates, the fourth gear 326 rotates synchronously. The fourth gear 326 is fixedly connected to the lead screw 310, and the lead screw 310 is also rotatably mounted, so that the lead screw 310 rotates along with a rotation of the fourth gear 326, thereby smoothly driving the lead screw 310 to rotate.

Referring to FIG. 4, in some embodiments of the present application, the first gear 322 and the second gear 324 are both bevel gears, and the third gear 325 and the fourth gear 326 are spur gears. Meanwhile, in order to adjust a rotation speed, a diameter of the first gear 322 is less than a diameter of the second gear 324, and a diameter of the third gear 325 is less than a diameter of the fourth gear 326, so as to achieve a speed reduction transmission, so that a rotation of a lead screw 310 is controlled.

FIG. 5 is a schematic structural diagram of a right sectional view of a universal fixture according to some embodiments of the present application. Referring to FIG. 5, an unlocking mechanism 400 includes a second power member 410, a second transmission assembly, a rotating shaft 470, a rotating assembly 480, and an unlocking assembly. The second transmission assembly includes a fifth gear 420, a second transmission shaft 430, a sixth gear 440, a seventh gear 450, and an eighth gear 460. The second power member 410 has a second power output end, for example, the second power member 410 may be a self-locking motor, and a motor shaft of the self-locking motor serves as a second power output end. The fifth gear 420 is connected to the second power output end, for example, coaxially and fixedly connected to a motor shaft by means of a coupling. The second transmission shaft 430 is rotatably connected to a base 100. The sixth gear 440 is fixed on the second transmission shaft 430, and the sixth gear 440 is engaged with the fifth gear 420. The seventh gear 450 is fixed on the second transmission shaft 430.

Referring to FIG. 5, the eighth gear 460 is fixed on the rotating shaft 470, and the eighth gear 460 is engaged with the seventh gear 450. The rotating shaft 470 is driven to rotate by the eighth gear 460, and the rotating shaft 470 is partially located in a quick-replacement cavity 110. Specifically, a part of the rotating shaft 470 located in the quick-replacement cavity 110 penetrates through a rotating cavity 311, that is, a lead screw 310 is sleeved outside the rotating shaft 470, and a bearing is mounted on the lead screw 310 to ensure a rotatably connection between the rotating shaft 470 and the lead screw 310.

The rotating assembly 480 is rotatably connected to the base 100, the rotating assembly 480 is fixedly connected to the rotating shaft 470, and the rotating assembly 480 partially extends out from the base 100, and an unlocking assembly is connected to a side, extending out from the base 100, of the rotating assembly 480.

During unlocking, the second power member 410 drives the fifth gear 420 to rotate, the fifth gear 420 drives the sixth gear 440 to rotate, so as to drive the second transmission shaft 430 to rotate, the second transmission shaft 430 drives the seventh gear 450 to rotate, the seventh gear 450 drives the eighth gear 460 to rotate, the eighth gear 460 drives the rotating shaft 470 to rotate, the rotating shaft 470 drives the rotating assembly 480 to rotate, and the rotating assembly 480 drives a unlocking assembly, and the unlocking assembly toggles an unlocking fixture by rotating, to enable the unlocking fixture to perform unlocking, thereby quickly completing the unlocking process through a transmission of the second power member 410 and the two sets of gears.

Referring to FIG. 5, in some embodiments of the present application, the fifth gear 420 and the sixth gear 440 are both bevel gears, and the seventh gear 450 and the eighth gear 460 are spur gears. Meanwhile, in order to adjust a rotating speed, a diameter of the fifth gear 420 is less than a diameter of the sixth gear 440, and a diameter of the seventh gear 450 is less than a diameter of the eighth gear 460, so as to achieve a speed reduction transmission to control a rotation of the rotating shaft 470.

In some embodiments of the present application, in order to avoid interference between a rotation of the lead screw 310 and the rotating shaft 470, both a first power member 321 and a second power member 410 may use self-locking motors. Alternatively, a lubricating member, such as a lubricating film or lubricating oil, may be added between the lead screw 310 and the rotating shaft 470 to ensure that a friction force between the lead screw 310 and the rotating shaft 470 is extremely small, and at this time, the first power member 321 and the second power member 410 can use a conventional motor instead of a self-locking motor.

In some embodiments of the present application, an expansion cavity is formed in the rotating shaft 470. Therefore, another rod-shaped structure may be mounted in the rotating shaft 470, and a corresponding cavity may also be provided inside a mounted rod-shaped structure, so that a plurality of rod-shaped structures may be sleeved together, so that a compactness of an overall structure is improved.

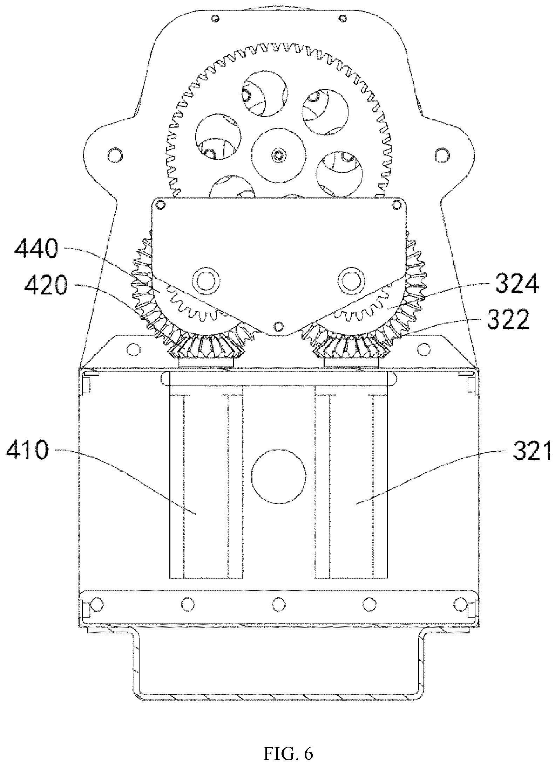

FIG. 6 is schematic diagram of a top view of a universal fixture after hiding an identification system according to some embodiments of the present application. Referring to FIG. 5 and FIG. 6, a rotating assembly 480 includes a connecting member 481 and a toggle member 482. The connecting member 481 is rotatably connected in a quick-replacement cavity 110, and a bottom wall of the connecting member 481 is fixedly connected to the rotating shaft 470. The toggle member 482 is fixed on the connecting member 481, one end, away from the connecting member 481, of the toggle member 482 extends out from the quick-replacement cavity 110, and the base 100 is provided with a sliding ring hole for the toggle member 482 to slide.

Specifically, the connecting member 481 may be a connecting disc, the toggle member 482 may be a toggle rod, the number of the toggle rods may be two, and the two toggle rods may be directly welded to a top wall of the connecting disc.

After an unlocking fixture is fixed, the toggle member 482 is connected to a unlocking assembly, so that when the rotating shaft 470 rotates, the connecting member 481 is driven to rotate, the connecting member 481 drives the toggle member 482 to rotate, and at this time, the toggle member 482 is connected to the unlocking assembly, so as to drive the unlocking assembly to unlock.

Referring to FIG. 6, the first power member 321 and the second power member 410 adopt a left-right symmetrical layout, so that an overall structure may be more compact. In addition, the first transmission assembly and the second transmission assembly adopt an arrangement mode of staggered positions according to a mounting space, so that an occupied space is reduced, and a compactness of an overall structure is further improved. At the same time, both the first power member 321 and the second power member 410 use a servo motor with a brake function, so that a possibility of interference between the rotating shaft 470 and the lead screw 311 may be prevented.

Referring to FIG. 4, in some embodiments of the present application, a universal fixture further includes a fixed shaft 130 and a support plate 140. The fixed shaft 130 is fixed on a base 100. The support plate 140 is fixed at one end, away from the base 100, of the fixed shaft 130, and a first transmission shaft 323 and a second transmission shaft 430 are both rotatably connected to the support plate 140. Specifically, axes of the first transmission shaft 323 and the second transmission shaft 430 are both parallel to the fixed shaft 130, and a stability of the first transmission shaft 323 and the second transmission shaft 430 may be effectively improved by providing the support plate 140.

### Exemplary Robot

Referring to FIG. 5, the robot includes an identification system600 and a universal fixture as described in any one of the foregoing embodiments. The identification system 600 is disposed on the universal fixture.

During a running of the robot, the identification system 600 may be used to control the fixture to operate according to a program and a method which are set in advance, so that the universal fixture and an unlocking fixture may be controlled to be quickly disassemble and assemble, and the fixture may also be controlled to unlock by using the unlocking fixture, and an overall automation degree is effectively improved.

Since the above-mentioned robot is provided with the above-mentioned fixture, the above-mentioned robot has all the technical effects of the above-mentioned fixture, which is not described in detail herein.

### Exemplary Unlocking system

The unlocking system includes a robot as described in the above embodiments and a conveying device. The conveying device is disposed outside the robot. Specifically, the conveying device may be a belt, or may be another device with a conveying capability.

During unlocking by using the robot, an unlocking fixture may be conveyed to a vicinity of the robot by using the conveying device, and a lock removed by the robot may also be conveyed to a designated position, so that an overall automation degree is further improved.

Since the above-mentioned unlocking system is provided with the above-mentioned robot, the above-mentioned unlocking system has all the technical effects of the above-mentioned robot, which is not described in detail herein.

The foregoing is only preferred embodiments of the present application, and is not intended to limit the present application, and any modification, equivalent replacement, and the like, made within the spirit and principle of the present application should be included within the protection scope of the present application.

## Claims

1. A universal fixture, wherein the universal fixture comprises:
a base (100), having a quick-replacement cavity (110) enclosed by a side wall of the base (100);
a clamping assembly (200), disposed on the side wall and configured to be capable of extending out from the side wall or retracting back;
a driving mechanism (300), disposed on the base (100) and configured to extend into the quick-replacement cavity (110) to drive the clamping assembly (200) to extend or retract; and
an unlocking mechanism (400), disposed on the base (100) and configured to penetrate through the quick-replacement cavity (110) to provide unlocking power.

2. The universal fixture according to claim 1, wherein the driving mechanism (300) comprises a lead screw (310) and a pressing member (330) in a threaded fit with the lead screw (310), the pressing member (330) is located in the quick-replacement cavity (110) and is driven to move through rotation of the lead screw (310), so as to drive the clamping assembly (200) to extend or retract; wherein a rotating cavity (311) is formed in the lead screw (310); and
the unlocking mechanism (400) comprises a rotating shaft (470) configured to drive an unlocking assembly to rotate, and the rotating shaft (470) penetrates through the rotating cavity (311).

3. The universal fixture according to claim 2, wherein the driving mechanism (300) further comprises a first power member (321) and a first transmission assembly driven by the first power member (321), and the first transmission assembly is connected to the lead screw (310) to drive the lead screw (310) to rotate; and
the unlocking mechanism (400) further comprises a second power member (410) and a second transmission assembly driven by the second power member (410), and the second transmission assembly is connected to the rotating shaft (470) to drive the rotating shaft (470) to rotate, wherein
the first power member (321) and the second power member (410) both use an electric motor with a brake function.

4. The universal fixture according to claim 2, wherein a bearing is disposed in the rotating cavity (311), and the rotating shaft is supported by the bearing to rotate.

5. The universal fixture according to claim 1, wherein the side wall of the base (100) is provided with a clamping hole (120) in communication with the quick-replacement cavity (110), and the clamping assembly (200) comprises:
a pin rod (210), slidably connected to the clamping hole (120); and
a pin head (220), disposed at an end, close to the quick-replacement cavity (110), of the pin rod (210), and a cross-sectional area of the pin head (220) is greater than a cross-sectional area of the clamping hole (120), wherein
the driving mechanism (300) is in contact with the pin head (220).

6. The universal fixture according to claim 5, wherein the clamping assembly (200) further comprises:
an elastic resetting member (230), wherein the elastic resetting member (230) abuts against the pin head (220), and a side, away from the pin head (220), of the elastic resetting member (230) abuts against a cavity wall of the quick-replacement cavity (110).

7. The universal fixture according to claim 5, wherein a side, away from the pin head (220), of the pin rod (210) is provided with a spherical surface (211).

8. The universal fixture according to any one of claims 1 to 7, wherein the universal fixture further comprises:
a fixture flange (700), detachably connected to the base (100) by using the clamping assembly (200).

9. The universal fixture according to claim 8, wherein the universal fixture further comprises:
a floating device (500), disposed on the base (100), wherein the floating device (500) is connected to the fixture flange (700).

10. The universal fixture according to claim 9, wherein the floating device (500) further comprises:
a guide member (510), disposed on the base (100); and
an elastic member (520), disposed on the guide member (510) and one end of the elastic member (520) abuts against the base (100).

11. The universal fixture according to claim 1, wherein the driving mechanism (300) comprises:
a lead screw (310), rotatably connected to the base (100), and one end of the lead screw (310) being located in the quick-replacement cavity (110);
a driving member (320), connected to the lead screw (310), wherein the driving member (320) is configured to drive the lead screw (310) to rotate; and
a pressing member (330), in threaded connection with one end, located in the quick-replacement cavity (110), of the lead screw (310), and the pressing member (330) abutting against the clamping assembly (200), so that the pressing member (330) moves axially along the lead screw (310) to push the clamping assembly (200) to extend or retract.

12. The universal fixture according to claim 11, wherein an outer side surface of the pressing member (330) is provided with a first pressing inclined surface (331), and an outer side surface of the clamping assembly (200) is provided with a second pressing inclined surface (201) that abuts against the first pressing inclined surface (331).

13. The universal fixture according to claim 11, wherein the driving mechanism further comprises:
a limiting rod (340), one end connected to the base (100); wherein
the pressing member (330) is provided with a limiting hole (332), and one end, away from the base (100), of the limiting rod (340) is in a sliding fit with the limiting hole (332); and
the limiting rod (340) is provided with a boss (341), a cross-sectional area of the boss (341) is greater than a cross-sectional area of the limiting hole (332), so as to limit a movement range of the pressing member (330) by the boss (341).

14. The universal fixture according to claim 11, wherein the driving member comprises:
a first power member (321), provided with a first power output end; and
a first transmission assembly, connected to the first power output end and the lead screw (310) respectively.

15. The universal fixture according to claim 14, wherein the unlocking mechanism comprises:
a second power member (410), provided with a second power output end;
a second transmission assembly, connected to the second power output end;
a rotating shaft (470), rotatably connected to the base (100) and partially located in the quick-changing cavity (110), wherein the rotating shaft (470) is connected to the second transmission assembly;
a rotating assembly (480), fixedly connected to the rotating shaft (470), wherein the rotating assembly partially extends out from the base, so as to implement unlocking during rotation; and
an unlocking assembly, connected to a side, extending out from the base (100), of the rotating assembly (480).

16. The universal fixture according to claim 15, wherein an expansion cavity is formed in the rotating shaft (470).

17. The universal fixture according to claim 15, wherein the rotating assembly (480) comprises:
a connecting member (481), fixedly connected to the rotating shaft (470); and
a toggle member (482), fixed on the connecting member (481), wherein one end, away from the connecting member (481), of the toggle member (482) extends out from the quick-replacement cavity (110), and the base (100) is provided with a sliding ring hole for the toggle member (482) to slide.

18. The universal fixture according to claim 15, wherein the universal fixture further comprises:
a fixed shaft (130), fixed on the base (100); and
a support plate (140), fixed at one end, away from the base (100), of the fixed shaft (130), wherein both the first transmission assembly and the second transmission assembly are rotatably connected to the support plate (140).

19. A robot, comprising:
the universal fixture according to any one of claims 1 to 18; and
an identification system (600), disposed on the base (100) of the universal fixture.

20. An unlocking system, comprising:
the robot according to claim 19; and
a conveying device, disposed outside the robot.
